# EUROPÄISCHE PATENTSCHRIFT

(11) **EP 3 377 263 B1**
(45) Veröffentlichungstag und Bekanntmachung des Hinweises auf die Patenterteilung: **30.12.2020**
(21) Anmeldenummer: 16795053.4
(22) Anmeldetag: 14.11.2016
(51) Int. Cl.: B23K 26/03, B23K 26/38, B23K 31/10

(54) **VERFAHREN UND VORRICHTUNG ZUM ERKENNEN EINES DROHENDEN ODER ERFOLGTEN SCHNITTABRISSES BEIM THERMISCHEN TRENNEN EINES WERKSTÜCKS**
METHOD AND DEVICE FOR DETECTING AN IMPENDING INCOMPLETE CUT OR AN INCOMPLETE CUT WHICH HAS ALREADY OCCURRED WHEN THERMALLY SEPARATING A WORKPIECE
PROCÉDÉ ET DISPOSITIF DE DÉTECTION D'UNE COUPE INCOMPLÈTE IMMINENTE OU AYANT EU LIEU LORS DU COUPAGE THERMIQUE D'UNE PIÈCE

(30) Priorität: 18.11.2015 DE 102015119938
(43) Veröffentlichungstag der Anmeldung: 26.09.2018
(73) Patentinhaber: Messer Cutting Systems GmbH, 64823 Gross-Umstadt (DE)
(72) Erfinder: BAYRAM, Murat Cetin, 64720 Michelstadt (DE); MÜLLER, Thomas, 64823 Gross-Umstadt (DE)
(74) Vertreter: Staudt, Armin Walter
(86) Internationale Anmeldenummer: PCT/EP2016/077542
(87) Internationale Veröffentlichungsnummer: WO 2017/085000

(56) Entgegenhaltungen:
- DE-C1- 4 442 238
- DE-C2- 19 847 365

## Beschreibung

Die vorliegende Erfindung betrifft ein Verfahren zum Erkennen eines drohenden oder erfolgten Schnittabrisses beim thermischen Trennen eines Werkstücks, bei dem in einen Schnittbereich ein Energieeintrag erfolgt, umfassend die Verfahrensschritte:
a) Beaufschlagen des Werkstücks mit einem ersten Wechselsignal,
b) Erfassen eines von dem ersten Wechselsignal in einer vom Werkstück beabstandeten Messelektrode hervorgerufenen, zweiten Wechselsignals.

Weiterhin betrifft die vorliegende Erfindung eine Vorrichtung zum Erkennen eines drohenden oder erfolgten Schnittabrisses beim thermischen Trennen eines Werkstücks, bei dem in einen Schnittbereich ein Energieeintrag erfolgt, aufweisend einen Wechselsignal-Generator zum Erzeugen eines ersten Wechselsignals und eine vom Werkstück beabstandete Messelektrode zur Erfassung eines von dem Wechselsignal in der Messelektrode hervorgerufenen, zweiten Wechselsignals. Verfahren und Vorrichtung im Sinne der Erfindung werden beim thermischen Trennen von Werkstücken eingesetzt, beispielsweise beim Zuschnitt von Blechen mit einem Schneidbrenner, Laser oder Plasmaschneider. Das Verfahren und die Vorrichtung ermöglichen eine automatisierte Erkennung eines Schnittabrisses; sie sind daher insbesondere in Autogen-, Plasma- oder Laser-Schneidmaschinen einsetzbar.

### Stand der Technik

Beim Schneiden von metallischen Werkstücken können Schneidfehler auftreten. Ein häufiger Schneidfehler ist der Schnittabriss, der durch einen unvollständig ausgebildeten Schnittspalt gekennzeichnet ist. Häufig wird bei einem Schnittabriss das zu trennende Werkstück in einem dem Bearbeitungskopf abgewandten Bereich des Schnittspalts nicht vollständig aufgeschmolzen oder die eigentlich geschnittenen Werkstück-Teile werden durch wiedererstarrende Schlacke erneut miteinander verbunden.

Wird ein Schnittabriss nicht oder zu spät bemerkt, kann dies zu einem übermäßig starken Verschleiß der Schneidmaschine, insbesondere der Schneiddüse führen, im Falle von Laser-Schneidmaschinen sogar zum Linsenbruch. Ein nicht erkannter Schnittabriss verursacht daher oft erhebliche Stillstandzeiten der Maschine. Es ist daher grundsätzlich wünschenswert, den Schneidprozess kontinuierlich auf Fehlschnitte hin zu überwachen, so dass Beschädigungen der Schneidmaschine weitestgehend vermieden werden.

Bekannte Verfahren, die zum Erkennen eines Schnittabrisses eingesetzt werden, nutzen meist optische Sensorsysteme. Häufig sind diese Sensoren so angeordnet, dass sie im Bereich des Schnittspalts einen Strahlungsdurchtritt durch das Werkstück erfassen können oder sie sind zur Erfassung der Lichtemission des bei der Bearbeitung des Werkstücks entstehenden Plasmas oder der Streustrahlung, die bei einem Schnittabriss durch Reflexion am unvollständig geschnittenen Werkstück entstehen kann, ausgelegt.

Voraussetzung für diese Verfahren ist der Einsatz optischer Sensoren, die das Vorhandensein bestimmter Strahlungsanteile und deren Intensität detektieren können. Der Einsatz optischer Sensoren erfordert allerdings einen gewissen Bauraum. Darüber hinaus sind die Sensoren entweder in der Nähe des Werkstücks angeordnet, so dass sie unter Trennbedingungen hohen thermischen Beanspruchungen ausgesetzt sind oder sie sind in einem Abstand zum Trennprozess angeordnet, so dass das Signal des Sensors in der Regel verstärkt werden muss. Des Weiteren haben optische Sensoren den Nachteil, dass es Einflussfaktoren im Strahlgang gibt, die das Sensor-Signal verändern, beispielsweise der Düsendurchmesser.

Es besteht daher der grundsätzliche Bedarf an einem einfachen Verfahren zum Erkennen eines Schnittabrisses, das ohne optische Sensoren auskommt.

Ein solches Verfahren ist aus der DE 198 47 365 C2, die als nächstliegender Stand der Technik angesehen wird, bekannt. Anstelle eines optischen Erfassungssystems ist ein LC-Schwingkreis vorgesehen, dessen Kapazität durch die zwischen Bearbeitungskopf und Werkstück vorhandene Kapazität bestimmt wird. Kommt es zu einem Schnittabriss, verbleibt ein Teil des bei der thermischen Bearbeitung entstehenden Plasmas im Zwischenraum zwischen Bearbeitungskopf und Werkstück. Hierdurch ändert sich die Kapazität im LC-Schwingkreis. Das Plasma im Zwischenraum erzeugt im LC-Generator-Ausgangssignal einen sprunghaften Amplitudenanstieg, der als Indikator für einen Schnittabriss dient.

Bei diesem Verfahren hängt die Schnittabrisserkennung im Wesentlichen von der Erfassung des Amplitudenanstiegs im LC-Generator-Ausgangssignal ab. Allerdings wird die Amplitudenhöhe von einer Vielzahl von Faktoren beeinflusst, beispielsweise von den im Schwingkreis vorhandenen Widerständen und der Größe des Zwischenraums, insbesondere aber durch den Abstand zwischen Bearbeitungskopf und Werkstück. Häufig gehen schon geringe Abstandsänderungen zwischen Werkstück und Bearbeitungskopf mit einer Änderung der Amplitudenhöhe einher. Darüber hinaus weist das LC-Generator-Ausgangssignal häufig ein Hintergrundrauschen auf, das eine exakte, insbesondere eine frühzeitige Erfassung eines Schnittabrisses erschwert.

Dies gilt insbesondere bei kleineren Werkstücken, da deren Form die Kapazität des Schwingkreises beeinflussen kann und zu einer Überlagerung des LC-Generator-Ausgangssignals mit einem Rauschsignal beitragen kann. Insbesondere eine geringe Amplituden-Höhe und ein schlechtes Signal-Rausch-Verhältnis erschweren eine möglichst frühzeitige Erkennung eines potentiellen Schnittabrisses.

Aus der DE 44 42 238 C1 ist ein Verfahren zur thermischen Bearbeitung eines Werkstücks mittels Laserstrahlung bekannt, bei dem mittels einer zum Werkstück positionierbaren Sensorelektrode eine von der Sensorelektrode und dem Werkstück gebildete Kapazität und deren Änderungen bei der Bearbeitung erfasst werden. Erfasst die Sensorelektrode Kapazitätsmesswerte, die einen vorgegebenen Soll-Wert übersteigen, wird ein Fehlersignal erzeugt, das beispielsweise als Signal für eine Beendigung der Bearbeitung genutzt werden kann.

### Technische Aufgabe

Der Erfindung liegt daher die Aufgabe zugrunde, ein Verfahren zum Erkennen eines drohenden oder erfolgten Schnittabrisses anzugeben, das eine frühzeitige Erkennung eines drohenden Schnittabrisses ermöglicht.

Weiterhin liegt der Erfindung die Aufgabe zugrunde, eine Vorrichtung zum Erkennen eines drohenden oder erfolgten Schnittabrisses anzugeben, die eine frühzeitige Erkennung eines drohenden Schnittabrisses ermöglicht.

### Allgemeine Beschreibung der Erfindung

Hinsichtlich des Verfahrens wird die oben genannte Aufgabe erfindungsgemäß dadurch gelöst, dass das Verfahren weiterhin die Verfahrensschritte umfasst:
c) Ermitteln der Phasenverschiebung zwischen erstem und zweitem Wechselsignal unter Ausgabe eines Phasenverschiebungssignals,
d) Vergleichen des Phasenverschiebungssignals mit einem vorgegebenen oberen Grenzwert und einem vorgegebenen unteren Grenzwert für das Phasenverschiebungssignal,
wobei, wenn das Phasenverschiebungssignal den oberen Grenzwert überschreitet oder den unteren Grenzwert unterschreitet, der Energieeintrag verändert wird.

Der Erfindung liegt die Idee zugrunde, die Entstehung eines Schnittabrisses möglichst frühzeitig zu erkennen, mit dem Ziel, geeignete Maßnahmen zu treffen, um der vollständigen Ausbildung des Schnittabrisses entgegenzuwirken.

Gemäß der Erfindung werden daher zwei Modifikationen vorgeschlagen, von denen eine ein verbessertes Verfahren zur Schnittabrisserkennung und die andere geeignete Maßnahmen zur Schnittabrissverhinderung betrifft.

Im Gegensatz zu bekannten Verfahren mit einem LC-Schwingkreis wird auf eine Auswertung des Amplitudensignals verzichtet. Stattdessen wird gemäß der Erfindung eine Differenz-Messmethode zur Schnittabrisserkennung angewandt, bei der zwei Signale verwendet und deren Phasenverschiebung zueinander bestimmt wird, nämlich ein Messsignal, das von einer Messelektrode ausgegeben wird und ein Referenzsignal, auf das das Messsignal der Messelektrode bezogen wird. Durch den Vergleich der Phasenlage von Messsignal und Referenzsignal wird das Phasenverschiebungssignal erzeugt. Dies ist ein bereinigtes Auswertungssignal, in dem Messfehler eliminiert sind, und das ein besonders gutes Signal-Rausch-Verhältnis aufweist.

signal ein Wechselspannungssignal *U₁(t).* Das erste Wechselsignal erzeugt in einer in einem Abstand zum Werkstück angeordneten Elektrode ein zweites Wechselsignal, beispielsweise ein Wechselstromsignal *I_{1,ϕ}(t),* das als Messsignal verwendet wird, und das gegenüber dem ersten Wechselsignal (Referenzsignal) eine Phasenverschiebung aufweist. Es hat sich gezeigt, dass das Phasenverschiebungssignal von der Messelektrode und dem Werkstück gebildeten Kapazität abhängt. Mit zunehmendem Abstand der Messelektrode zum Werkstück nimmt der Betrag des Phasenverschiebungssignals zu. Bei konstantem Abstand von Messelektrode und Werkstück wird die Kapazität vornehmlich von der Dielektrizitätszahl des Dielektrikums bestimmt. Da sich im Falle eines Schnittabrisses im Zwischenraum zwischen Messelektrode und Werkstück vermehrt Plasma bildet, ändert sich die Zusammensetzung des Dielektrikums und damit die von Messelektrode und Werkstück gebildete Kapazität. Gleichzeitig wird durch die geänderte Kapazität eine Änderung des Phasenverschiebungssignals beobachtet.

Um die Phasenverschiebung möglichst exakt erfassen zu können, wird das erste Wechselsignal als Referenzsignal verwendet. Die Phasenverschiebung wird durch einen Vergleich des ersten Wechselsignals mit dem zweiten Wechselsignal ermittelt. Hierbei hat es sich bewährt, wenn das als Referenzsignal dienende erste Wechselsignal zur Ermittlung der Phasenverschiebung zunächst invertiert, die Amplitude von erstem und zweitem Wechselsignal aufeinander abgestimmt und angeglichen werden und das erste und das zweite Wechselsignal anschließend addiert werden. In diesem Fall heben sich, sofern keine Phasenverschiebung vorliegt, erstes und zweites Wechselsignal auf. Liegt allerdings eine Phasenverschiebung vor, so wird ein Phasenverschiebungssignal erhalten, dessen Höhe und Richtung von der Phasenverschiebung abhängt. Das Phasenverschiebungssignal ändert sich bei einer Abstandsänderung von Messelektrode zu Werkstück und bei einer Änderung des Dielektrikums durch Plasmabildung im Zwischenraum.

Darüber hinaus werden gemäß der Erfindung Maßnahmen angegeben, mit denen auf einen erkannten, drohenden Schnittabriss reagiert werden kann. Eine häufige Ursache für einen Schnittabriss ist, dass die in den Schnittbereich eingebrachte Energiemenge zu gering ist. Hierbei wird unter dem Schnittbereich der Teil der Schnittfuge verstanden, in den Energie zwecks Aufschmelzung desselben eingebracht wird. Gründe für eine zu geringe Energiemenge können beispielsweise eine falsche Position des Schneidgeräts, eine falsche Fokuslage des Lasers, eine zu hohe Werkstück-Materialstärke, eine zu kurze Verweildauer über dem späteren Schnittspalt oder eine zu hohe Schnittgeschwindigkeit sein.

Unabhängig von der Ursache kann in den meisten Fällen einem Schnittabriss entgegengewirkt werden, wenn der Energieeintrag erhöht wird, also mehr Energie pro Flächeneinheit des Schnittbereichs zur Verfügung gestellt wird. Dies kann erreicht werden, indem beispielsweise die Schneidleistung des Bearbeitungswerkzeugs erhöht, die Fokuslage eines Lasers variiert oder die Trenngeschwindigkeit erniedrigt wird.

Die vorgenannte Maßnahme trägt dazu bei, dass bei Erkennen eines drohenden Schnittabrisses diesem entgegengewirkt werden kann, so dass ein Schnittabriss, eine Beschädigung des Werkstücks und eine Verfahrensunterbrechung vermieden werden. Hierdurch wird ein besonders effizientes und kostengünstiges Verfahren erhalten.

Es hat sich bewährt, wenn das thermische Trennen mit einer Trenngeschwindigkeit erfolgt, und wenn der Energieeintrag verändert wird, indem die Trenngeschwindigkeit reduziert wird.

Die Trenngeschwindigkeit ist die Geschwindigkeit, mit der das Werkstück in Schnittrichtung gesehen getrennt wird, mit der sich also der Schnitt verlängert. Sie wird in Millimeter pro Minute (mm/min) angegeben. Die Trenngeschwindigkeit ist ein Parameter, der schnell und einfach angepasst werden kann. Ihre Anpassung ermöglicht daher eine schnelle Reaktion auf das Erkennen eines Schnittabrisses. Sie ist darüber hinaus einfach einstellbar, da bekannte Schneidmaschinen regelmäßig eine Bewegungseinheit für die Schneideinheit oder das Werkstück aufweisen, mit der die Schneideinheit, beispielsweise ein Laser-, Autogen- oder Plasmaschneidkopf, und die Werkstückoberfläche relativ zueinander bewegbar sind.

In diesem Zusammenhang hat es sich als vorteilhaft erwiesen, wenn die Trenngeschwindigkeit stufenweise reduziert wird.

Um einem drohenden Schnittabriss effizient entgegenwirken zu können, ist häufig eine schnelle Anpassung der Trenngeschwindigkeit notwendig. Insbesondere eine stufenweise Reduzierung der Trenngeschwindigkeit geht mit einer schnellen Erhöhung des Energieeintrags einher. Gleichzeitig kann die Auswertung der Änderungen des Phasenverschiebungssignals überwacht werden und als Grundlage für eine weitere stufenweise Änderung der Trenngeschwindigkeit herangezogen werden. Es hat sich als vorteilhaft erwiesen, wenn die Trenngeschwindigkeit zunächst um einen prozentualen Teil in einem Bereich von 15% bis 40%, vorzugsweise um 20% gegenüber der ursprünglichen Trenngeschwindigkeit reduziert wird und anschließend in Abhängigkeit des Phasenverschiebungssignals in Stufen, vorzugsweise mit einer Stufenbreite im Bereich von 2% bis 10%, besonders bevorzugt in Stufen von ± 5 % bezogen auf die ursprüngliche Trenngeschwindigkeit angepasst wird.

Bei einer bevorzugten Ausgestaltung des Verfahrens ist vorgesehen, dass nach dem Reduzieren der Trenngeschwindigkeit die Trenngeschwindigkeit wieder erhöht wird, wenn das Phasenverschiebungssignal wieder im Bereich zwischen unterem und oberem Grenzwert liegt.

Nach dem Reduzieren des Energieeintrags in den Schnittbereich, kehrt das Phasenverschiebungssignal regelmäßig wieder in einen Wertebereich zurück, der innerhalb des Bereichs zwischen oberem und unterem Grenzwert liegt und der in etwa dem Wertebereich vor dem drohenden Schnittabriss entspricht. In diesem Fall hat es sich bewährt die Trenngeschwindigkeit wieder stufenweise anzuheben. Hierdurch kann wieder zur ursprünglichen Trenngeschwindigkeit zurückgekehrt werden, so dass ein optimiertes effizientes Trennverfahren gewährleistet wird.

Bei einer ebenso bevorzugten Ausgestaltung des Verfahrens wird der Energieeintrag verändert, indem das thermische Trennen des Werkstücks gestoppt wird.

Eine Unterbrechung des thermischen Trennens des Werkstücks ist ebenfalls geeignet, eine Beschädigung von Maschinenbauteilen der Schneidmaschine zu verringern; sie stellt eine besonders einfach durchzuführende Maßnahme dar.

Bei einer geeigneten Modifikation dieser Verfahrensweise ist außerdem vorgesehen, dass nach dem Stoppen des thermischen Trennens des Werkstücks ein Trennvorgang ab einem Schnittabrisspunkt erneut gestartet wird.

Der Schnittabrisspunkt ist der Punkt, an dem der Schnittabriss eingetreten ist. Es kann gegebenenfalls erforderlich sein, den Schneidstrahl an den Schnittabrisspunkt zurückzubewegen.

Bei einer weiteren bevorzugten Modifikation des Verfahrens ist vorgesehen, dass beim thermischen Trennen der Messelektroden-Abstand zum Werkstück mit einer Abstandsregelung auf einem vorgegebenen Abstands-Sollwert gehalten wird, und dass, wenn das Phasenverschiebungssignal den oberen Grenzwert überschreitet oder den unteren Grenzwert unterschreitet, die Messelektrode auf eine vorgegebene feste Position eingestellt wird.

Ebene Werkstückoberflächen weisen häufig Unebenheiten auf, die die Genauigkeit des Schnittabrissverfahrens beeinträchtigen können. Aber auch bei Werkstücken mit unterschiedlichen Werkstück-Höhen ist es zur Erzielung eines guten Signal-Rausch-Verhältnisses im Phasenverschiebungssignal wünschenswert, einen möglichst gleichmäßigen Abstand zum Werkstück einzuhalten. Eine Abstandsregelung, mit der der Messelektroden-Abstand auf einen vorgegebenen Sollwert geregelt wird, trägt zu einem verbesserten Signal-Rausch-Verhältnis bei. Bei drohendem Schnittabriss kann eine gleichzeitige Abstandsregelung des Messelektroden-Abstands allerdings zu einer Erhöhung der Messungenauigkeit beitragen, da die Genauigkeit einer Abstandsregelung regelmäßig auch von dem beim Schnittabriss entstehenden Plasma beeinträchtigt wird. Um im Falle eines drohenden Schnittabrisses das Signal-Rausch-Verhältnis bei der Schnittabriss-Messung zu optimieren, wird bei einem Überschreiten des oberen Grenzwerts oder einem Unterschreiten des unteren Grenzwerts die Messelektrode vorzugsweise auf eine vorgegebene, feste Höhen-Position eingestellt, vorzugsweise auf den vor dem Schnittabriss eingestellten Abstand. Hierdurch werden abstandsbedingte Fehlersignale verringert.

In diesem Zusammenhang hat es sich als günstig erwiesen, wenn die vorgegebene feste Höhen-Position aus Höhenwerten oder Abstandswerten der Messelektrode zur Werkstückoberfläche in einem Zeitintervall vor dem Überschreiten des oberen Grenzwerts oder Unterschreiten des unteren Grenzwerts ermittelt wird.

Aus den Höhenwerten oder den Abstandwerten der Messelektrode unmittelbar vor dem Überschreiten eines der Grenzwerte lässt sich in guter Näherung ein optimierte Höhen-Position der Messelektrode beziehungsweise ein optimierter Abstand ermitteln.

Wenn das Phasenverschiebungssignal den oberen Grenzwert überschreitet oder den unteren Grenzwert unterschreitet, wird vorzugsweise ein Warnsignal ausgegeben.

Die Ausgabe eines Warnsignals weist das Bedienpersonal auf einen potentiellen oder tatsächlichen Schnittabriss hin. Es trägt dazu bei, dass das Bedienpersonal gegebenenfalls - beispielsweise bei nicht-erfolgreicher Vermeidung eines Schnittabrisses - in das automatisierte Schneidverfahren manuell eingreifen kann.

Hinsichtlich der Vorrichtung wird die oben genannte Aufgabe durch eine Vorrichtung zum Erkennen eines Schnittabrisses beim thermischen Trennen eines Werkstücks gelöst, die aufweist: einen Wechselsignal-Generator zum Erzeugen eines ersten Wechselsignals, eine vom Werkstück beabstandete Messelektrode zur Erfassung eines von dem Wechselsignal in der Messelektrode hervorgerufenen, zweiten Wechselsignals, einen Phasen-Diskriminator zur Ermittlung einer Phasenverschiebung zwischen dem ersten und dem zweiten Wechselsignal, wobei der Phasen-Diskriminator ein Phasenverschiebungssignals ausgibt, und eine Kontrolleinheit zum Vergleich des Phasenverschiebungssignals mit einem vorgegebenen oberen Grenzwert und einem vorgegebenen unteren Grenzwert für das Phasenverschiebungssignal, wobei die Kontrolleinheit so ausgelegt ist, dass sie bei einem Überschreiten des oberen Grenzwerts oder einem Unterschreiten des unteren Grenzwerts den Energieeintrag mittels einer elektronischen Schaltung

Die Vorrichtung ermöglicht es, einen potentiellen Schnittabriss möglichst frühzeitig zu erkennen und geeignete Maßnahmen zu treffen, um der vollständigen Ausbildung des Schnittabrisses entgegenzuwirken.

Hierzu ist ein Wechselsignal-Generator vorgesehen, der geeignet ist, ein erstes Wechselsignal zu erzeugen, mit dem das Werkstück beaufschlagt werden kann. Vorzugsweise ist das erste Wechselsignal ein Wechselspannungssignal *U₁(t).* Das erste Wechselsignal ruft in einer in einem Abstand zum Werkstück angeordneten Elektrode ein zweites Wechselsignal hervor, das mit einer Messelektrode erfasst wird, die zum Werkstück einen Abstand aufweist. Das zweite Wechselsignal, beispielsweise ein Wechselstromsignal *I_{1,ϕ}(t),* und das erste Wechselsignal liegen als Messsignal an einem Phasendiskriminator an, der ein Phasenverschiebungssignal ausgibt, aus dem die Phasenverschiebung beider Signale ableitbar ist. Es hat sich gezeigt, dass die Phasenverschiebung von der von der Messelektrode und dem Werkstück gebildeten Kapazität abhängt, die bei konstantem Abstand von Messelektrode und Werkstück vornehmlich von der Dielektrizitätszahl des Dielektrikums bestimmt wird. Da sich im Falle eines Schnittabrisses im Zwischenraum zwischen Messelektrode und Werkstück vermehrt Plasma bildet, ändert sich die Zusammensetzung des Dielektrikums und damit die von Messelektrode und Werkstück gebildete Kapazität. Durch die geänderte Kapazität erfolgt eine Änderung des Phasenverschiebungssignals.

Die Kontrolleinheit ist dazu vorgesehen, das Phasenverschiebungssignal auf das Über- oder Unterschreiten vorgegebener Grenzwerte zu überwachen und dabei derart ausgelegt, dass sie bei einem Überschreiten des oberen Grenzwerts oder einem Unterschreiten des unteren Grenzwerts den Energieeintrag in den Schnittbereich des Werkstücks verändert.

Da eine häufige Ursache für einen Schnittabriss ist, dass die in den Schnittbereich eingebrachte Energiemenge zu gering ist, kann durch eine Veränderung des Energieeintrags in den meisten Fällen einem Schnittabriss entgegengewirkt werden, wenn der Energieeintrag erhöht wird, also mehr Energie pro Flächeneinheit des Schnittbereichs zur Verfügung gestellt wird.

### Ausführungsbeispiel

Nachfolgend wird die Erfindung anhand von Ausführungsbeispielen und zwei Zeichnungen näher beschrieben. Im Einzelnen zeigt in schematischer Darstellung:
- **Figur 1**: ein schematisches Schaltbild einer erfindungsgemäßen Schnittabrisserkennungs-Vorrichtung, und
- **Figur 2**: ein Diagramm, in dem ein Phasenverschiebungs-Gleichspannungssignal in Abhängigkeit von der Zeit dargestellt ist.

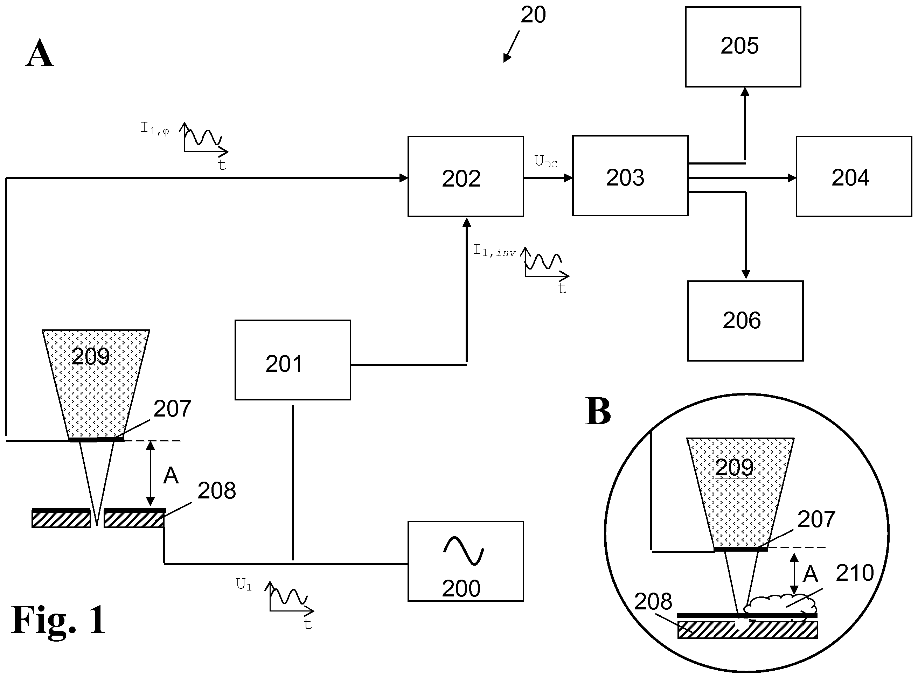

**Figur 1** zeigt in Abschnitt A ein schematisches Schaltbild einer erfindungsgemäßen Schnittabrisserkennungs-Vorrichtung, der insgesamt die Bezugsziffer 20 zugeordnet ist. Die Vorrichtung 20 umfasst einen Wechselsignalgenerator 200, eine Messelektrode 207, einen Invertierer 201, einen Phasendiskriminator 202, eine Kontroll-Einheit 203 sowie drei unabhängige elektronische Schaltungen 204, 205, 206.

Die Vorrichtung 20 ist Teil einer Laserschneidmaschine (nicht dargestellt), wie sie beispielsweise zum Schneiden eines ebenen Werkstücks 208 aus Metall, vorzugsweise aus Edelstahl, Aluminium, Kupfer oder Messing, eingesetzt wird.

Die Laserschneidmaschine umfasst einen Arbeitstisch mit einer Auflagefläche (nicht dargestellt) zur Aufnahme des Werkstücks 208, sowie eine bewegbare Laserbearbeitungseinheit (ebenfalls nicht dargestellt) mit einem Laser-Schneidkopf 209. An dem Laser-Schneidkopf 209 ist die Messelektrode 207 befestigt. Zur Einstellung eines vorgegebenen Abstands des Laser-Schneidkopfs 209 zur Werkstück-Oberfläche ist eine Höhensensorik (nicht dargestellt) vorgesehen, die die Position des Laser-Schneidkopfes 209 und damit der Messelektrode 207 festlegt.

Nachfolgend wird anhand der oben beschriebenen Laserschneidmaschine das erfindungsgemäße Verfahren erläutert.

Zunächst wird das Werkstück 208 mit einem Wechselspannungssignal *U₁(t)* beaufschlagt. Hierzu erzeugt der Wechselsignalgenerator 200 das Wechselspannungssignal *U₁(t),* das an dem Werkstück 208 anliegt und nachfolgend als Referenzsignal verwendet wird.

Das Wechselspannungssignal *U₁(t)* ruft in der Messelektrode 207 ein Wechselstromsignal *I_{1,ϕ}(t)* hervor. Beide Wechselsignale *U₁(t)* und *I_{1,ϕ}(t)* weisen gleiche Periodendauern auf; sie unterscheiden sich allerdings in der Phasenlage, wobei das Wechselstromsignal *I_{1,ϕ}(t)* um den Winkel *ϕ* gegenüber dem ersten Wechselspannungssignal *U₁(t)* phasenverschoben ist. Die Größe der Phasenverschiebung hängt dabei unter anderem vom Abstand der Messelektrode 207 zum Werkstück 208 ab. Mittels der Messelektrode 207 wird das Wechselstromsignal *I_{1,ϕ}(t)* erfasst.

Unter normalen Schnittbedingungen wird der Abstand zwischen Messelektrode 207 zum Werkstück 208 durch die Höhensensorik -von Regelabweichungen abgesehen - möglichst konstant gehalten. Das hieraus resultierende Wechselstromsignal *I_{1,ϕ}(t)* weist zwar ein gewisses Rauschen auf, zeigt aber eine zeitlich nahezu konstante Phasenverschiebung gegenüber dem Referenzsignal *U₁(t).*

Zur Ermittlung der Phasenverschiebung wird das Referenzsignal *U₁(t)* zunächst mittels des Invertierers 201 invertiert, also um 180° phasengedreht. Der Invertierer 201 liefert als Ausgangssignal ein phasengedrehtes Wechselstromsignal *I_{1,inv}(t).*

Am Phasendiskriminator 202 liegen sowohl das phasengedrehte Wechselstromsignal *I_{1,inv}(t)* als auch das phasenverschobene Wechselstromsignal *I_{1,ϕ}(t)* als Eingangssignale an. Der Phasendiskriminator 202 beinhaltet auch einen Gleichrichter. Sind die Wechselstromsignale *I_{1,ϕ}(t)* und *I_{1,inv}(t)* nicht zueinander phasenverschoben, heben sich diese bei gleicher Amplitudenhöhe vollständig auf. Im Falle einer Phasenverschiebung resultiert jedoch je nachdem, ob *I_{1,ϕ}(t) I_{1,inv}(t)* voraus- oder nacheilt ein positives oder negatives Phasenverschiebungssignal in Form des Gleichspannungssignals U_{DC}. Der Betrag des Signals ist ein Maß für den Phasenwinkel *Δϕ,* in dem sich die Phasen der Signale unterscheiden. Um einen einfachen Vergleich der Signale zu ermöglichen, wird optional mindestens eines der am Phasendiskriminator 202 anliegenden Signale vorverstärkt (nicht dargestellt), um die Amplitudenhöhe beider Signale aneinander anzupassen.

Anschließend wird das Phasenverschiebungssignal U_{DC} von der Kontrolleinheit 203 mit einem vorgegebenen oberen und unteren Grenzwert verglichen.

Im normalen Schneidbetrieb werden die Grenzwerte regelmäßig nicht über- oder unterschritten. Kommt es allerdings zu einem Schnittabriss, so entsteht auf der Oberseite des Werkstücks 208 eine Plasmakapsel 210. Diese Plasmakapsel 210 entsteht maßgeblich durch das Einkoppelns hoher Leistungsspitzen in das Werkstück 208.

Abschnitt B zeigt den Laser-Schneidkopf 209, das Werkstück 208 und die Plasmakapsel 210 im Falle eines Schnittabrisses.

Die Plasmakapsel 210 verursacht eine Änderung der Kapazität zwischen Messelektrode 207 und Oberseite des Werkstücks 208. Darüber hinaus werden gelöste Werkstückbestandteile aufgrund der nicht mehr das Material durchdringenden Schnittfuge in Richtung der Düse beziehungsweise der Messelektrode 207 beschleunigt. Hieraus resultiert eine geänderte Phasenverschiebung der Signale *I_{1,ϕ}(t)* und *I_{1,inv}(t).* Da sich die Kapazität zwischen Messelektrode 207 und Oberseite des Werkstücks 208 aufgrund des veränderlichen Plasmas sich im zeitlichen Verlauf ändert und schwankt, wird auch als Ausgangssignal des Phasendiskriminators 202 ein schwankendes Phasenverschiebungssignal U_{DC} erhalten, das zur Detektion des Schnittabrisses verwendet wird. Dazu wird das Phasenverschiebungssignal von der Kontrolleinheit 203 auf das Überschreiten eines oberen oder das Unterscheiten eines unteren Grenzwerts hin überwacht. Im Fall des Über- oder Unterschreitens des jeweiligen Grenzwerts wird:
- mittels der elektronischen Schaltung 204 die Trenngeschwindigkeit reduziert,
- mittels der elektronischen Schaltung 205 die Messelektrode auf eine vorgegebene feste Position eingestellt, und
- mittels der elektronischen Schaltung 206 ein optisches und akustisches Warnsignal ausgegeben.

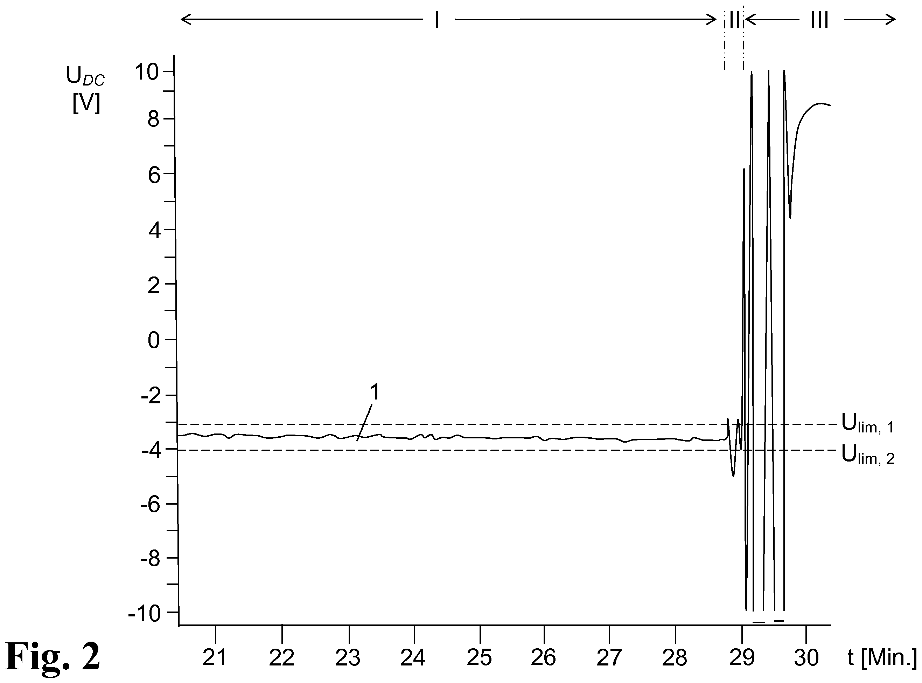

**Figur 2** zeigt beispielhaft einen zeitlichen Verlauf des Phasenverschiebungs-Spannungssignals U_{DC} bei einem guten Schnitt (Abschnitt I), einem drohenden Schnittabriss (Abschnitt II) und nach erfolgtem Schnittabriss (Abschnitt III). Das Phasenverschiebungssignal ist mit der Bezugsziffer 1 gekennzeichnet.

Vor dem Schnittabriss weist Phasenverschiebungssignal 1 ein während des Schneidvorgangs übliches Rauschen auf. Dennoch ist das Phasenverschiebungssignal 1 im Abschnitt I im Wesentlichen konstant und schwankt mit nur einer geringen Abweichung um einen Mittelwert. Ein drohender Schnittabriss führt zu einem Aufschwingen des Phasenverschiebungssignals 1 in Abschnitt II bis hin zum Vollausschlag in Abschnitt III.

Um einem drohenden Schnittabriss erfolgreich entgegenwirken zu können und dadurch einen Schnittabriss zu vermeiden, ist es wichtig, einen beginnenden Schnittabriss möglichst frühzeitig zu erkennen. Der Einsatz des Phasenverschiebungssignals ermöglicht insbesondere in Abschnitt II eine frühzeitige Schnittabrisserkennung. Der obere Grenzwert U_{lim,1} und der untere Grenzwert U_{lim,2} sind so gewählt, dass sie eine frühzeitige Erkennung ermöglichen.

## Patentansprüche

1. Verfahren zum Erkennen eines drohenden oder erfolgten Schnittabrisses beim thermischen Trennen eines Werkstücks (208), bei dem in einen Schnittbereich ein Energieeintrag erfolgt, umfassend die Verfahrensschritte:
a) Beaufschlagen des Werkstücks (208) mit einem ersten Wechselsignal,
b) Erfassen eines von dem ersten Wechselsignal in einer vom Werkstück (8) beabstandeten Messelektrode (207) hervorgerufenen, zweiten Wechselsignals,
**dadurch gekennzeichnet, dass** das Verfahren weiterhin die Verfahrensschritte umfasst:
c) Ermitteln der Phasenverschiebung zwischen erstem und zweitem Wechselsignal unter Ausgabe eines Phasenverschiebungssignals (1; U_{DC}),
d) Vergleichen des Phasenverschiebungssignals (1; U_{DC}) mit einem vorgegebenen oberen Grenzwert (U_{lim, 1})und einem vorgegebenen unteren Grenzwert (U_{lim,} 2) für das Phasenverschiebungssignal (1; U_{DC}),
wobei, wenn das Phasenverschiebungssignal (1; U_{DC}) den oberen Grenzwert (U_{lim, 1}) überschreitet oder den unteren Grenzwert (U_{lim, 2}) unterschreitet, der Energieeintrag verändert wird.

2. Verfahren nach Anspruch 1, **dadurch gekennzeichnet, dass** das thermische Trennen mit einer Trenngeschwindigkeit erfolgt, und dass der Energieeintrag verändert wird, indem die Trenngeschwindigkeit reduziert wird.

3. Verfahren nach Anspruch 2, **dadurch gekennzeichnet, dass** die Trenngeschwindigkeit stufenweise reduziert wird.

4. Verfahren nach einem der vorhergehenden Ansprüche 2 oder 3, **dadurch gekennzeichnet, dass** nach dem Reduzieren der Trenngeschwindigkeit die Trenngeschwindigkeit wieder erhöht wird, wenn das Phasenverschiebungssignal (1; U_{DC}) wieder im Bereich zwischen unterem (U_{lim,} 2) und oberem Grenzwert (U_{lim, 1}) liegt.

5. Verfahren nach einem der vorhergehenden Ansprüche, **dadurch gekennzeichnet, dass** der Energieeintrag verändert wird, indem das thermische Trennen des Werkstücks (208) gestoppt wird.

6. Verfahren nach Anspruch 5, **dadurch gekennzeichnet, dass** nach dem Stoppen des thermischen Trennens des Werkstücks (208) ein Trennvorgang ab einem Schnittabrisspunkt erneut gestartet wird.

7. Verfahren nach einem der vorhergehenden Ansprüche, **dadurch gekennzeichnet, dass** beim thermischen Trennen der Messelektroden-Abstand zum Werkstück (208) mit einer Abstandsregelung auf einem vorgegebenen Abstands-Sollwert gehalten wird, und dass, wenn das Phasenverschiebungssignal (1; U_{DC}) den oberen Grenzwert (U_{lim, 1}) überschreitet oder den unteren Grenzwert (U_{lim, 2}) unterschreitet, die Messelektrode (207) auf eine vorgegebene feste Höhen-Position eingestellt wird.

8. Verfahren nach Anspruch 7, **dadurch gekennzeichnet, dass** die vorgegebene feste Höhen-Position aus Höhenwerten oder Abstandswerten der Messelektrode (207) zur Werkstückoberfläche in einem Zeitintervall vor dem Überschreiten des oberen Grenzwerts (U_{lim, 1}) oder Unterschreiten des unteren Grenzwerts (U_{lim, 2}) ermittelt wird.

9. Verfahren nach einem der vorhergehenden Ansprüche, **dadurch gekennzeichnet, dass**, wenn das Phasenverschiebungssignal (1; U_{DC}) den oberen Grenzwert (U_{lim, 1}) überschreitet oder den unteren Grenzwert (U_{lim, 2}) unterschreitet, ein Warnsignal ausgegeben wird.

10. Vorrichtung zum Erkennen eines drohenden oder erfolgten Schnittabrisses beim thermischen Trennen eines Werkstücks (208), bei dem in einen Schnittbereich ein Energieeintrag erfolgt, aufweisend einen Wechselsignal-Generator (200) zum Erzeugen eines ersten Wechselsignals und eine vom Werkstück beabstandete Messelektrode (207) zur Erfassung eines von dem Wechselsignal in der Messelektrode (207) hervorgerufenen, zweiten Wechselsignals, **dadurch gekennzeichnet, dass** die Vorrichtung einen Phasen-Diskriminator (202) zur Ermittlung einer Phasenverschiebung zwischen dem ersten und dem zweiten Wechselsignal aufweist, wobei der Phasen-Diskriminator ein Phasenverschiebungssignal (1; U_{DC}) ausgibt, und eine Kontrolleinheit (203) zum Vergleich des Phasenverschiebungssignals (1; U_{DC}) mit einem vorgegebenen oberen Grenzwert (U_{lim, 1}) und einem vorgegebenen unteren Grenzwert (U_{lim, 2}) für das Phasenverschiebungssignal (1; U_{DC}) aufweist, wobei die Kontrolleinheit so ausgelegt ist, dass sie bei einem Überschreiten des oberen Grenzwerts (U_{lim, 1}) oder einem Unterschreiten des unteren Grenzwerts (U_{lim, 2}) den Energieeintrag mittels einer elektronischen Schaltung (204,205,206) verändert.

11. Vorrichtung nach Anspruch 10, **dadurch gekennzeichnet, dass** die Kontrolleinheit (203) so ausgelegt ist, dass sie bei einem Überschreiten des oberen Grenzwerts (U_{lim, 1}) oder einem Unterschreiten des unteren Grenzwerts (U_{lim, 2}) das thermische Trennen des Werkstücks (208) stoppt.

## Claims

1. A method for detecting an impending loss of cut or a loss of cut that has already occurred during the thermal separation of a workpiece (208), in which energy is input into a cutting region, said method comprising the following method steps:
a) applying a first alternating signal to the workpiece (208),
b) identifying a second alternating signal caused by the first alternating signal in a measurement electrode (207) spaced apart from the workpiece (208),
**characterized in that** the method further comprises the process steps c)
ascertaining the phase shift between the first and second alternating signal by outputting a phase shift signal (1; U_{DC}),
d) comparing the phase shift signal (1; U_{DC}) with a prescribed upper limit value and a prescribed lower limit value (U_{lim, 2}) for the phase shift signal (1; U_{DC}),
wherein, when the phase shift signal (1; U_{DC}) exceeds the upper limit value (U_{lim, 1}) or undershoots the lower limit value (U_{lim, 2}), the energy input is changed.

2. The method as claimed in claim 1, **characterized in that** the thermal separation is effected at a separation rate and **in that** the energy input is changed by reducing the separation rate.

3. The method as claimed in claim 2, **characterized in that** the separation rate is reduced in steps.

4. The method as claimed in either of the preceding claims 2 and 3, **characterized in that**, after the reduction of the separation rate, the separation rate is increased again when the phase shift signal (1; U_{DC}) is back in the range between the lower and upper limit value (U_{lim, 1}).

5. The method as claimed in one of the preceding claims, **characterized in that** the energy input is changed by stopping the thermal separation of the workpiece (208).

6. The method as claimed in claim 5, **characterized in that**, after the stopping of the thermal separation of the workpiece (208), a separation process is started again from a loss of cut point.

7. The method as claimed in one of the preceding claims, **characterized in that**, during thermal separation, a distance of the measurement electrode from the workpiece (208) is kept at a prescribed distance setpoint value using distance regulation and **in that**, when the phase shift signal (1; U_{DC}) exceeds the upper limit value (U_{lim, 1}) or undershoots the lower limit value (U_{lim, 2}), the measurement electrode (207) is set to a prescribed fixed height position.

8. The method as claimed in claim 7, **characterized in that** the prescribed fixed height position is ascertained from height values or distance values of the measurement electrode (207) with respect to the workpiece (208) surface in a time interval before the upper limit value (U_{lim, 1}) is exceeded or the lower limit value (U_{lim, 2}) is undershot.

9. The method as claimed in one of the preceding claims, **characterized in that**, when the phase shift signal (1; U_{DC}) exceeds the upper limit value (U_{lim, 1}) or undershoots the lower limit value (U_{lim, 2}), a warning signal is output.

10. An apparatus for detecting an impending loss of cut or a loss of cut that has already occurred during the thermal separation of a workpiece (208), in which energy is input into a cutting region, said apparatus comprising an alternating signal generator (200) generating a first alternating signal, a measurement electrode (207), which is spaced apart from the workpiece (208), for identifying a second alternating signal caused by the alternating signal in the measurement electrode (207), a phase discriminator (202) ascertaining a phase shift between the first alternating signal and the second alternating signal, wherein the phase discriminator outputs a phase shift signal (1; U_{DC}), and a monitoring unit (203) comparing the phase shift signal (1; U_{DC}) with a prescribed upper limit value and a prescribed lower limit value (U_{lim, 2}) of the phase shift signal (1; U_{DC}), wherein the monitoring unit is configured so as to change the energy input by an electronic circuit (204, 205, 206) when the upper limit value (U_{lim, 1}) is exceeded or the lower limit value (U_{lim, 2}) is undershot.

11. The apparatus as claimed in claim 10, **characterized in that** the monitoring unit (203) is designed in such a way that it stops the thermal separation of the workpiece (208) when the upper limit value (U_{lim, 1}) is exceeded or the lower limit value (U_{lim, 2}) is undershot.

## Revendications

1. Procédé servant à identifier un risque ou la survenue d'une rupture de coupe lors du coupage thermique d'une pièce (208), où un apport en énergie est effectué dans une zone de coupe, comprenant les étapes de procédé :
a) de soumission de la pièce (208) à l'action d'un premier signal alternatif ;
b) de détection d'un deuxième signal alternatif provoqué par le premier signal alternatif dans une électrode de mesure (207) tenue à distance de la pièce (8),
**caractérisé en ce que** le procédé comprend par ailleurs les étapes de procédé :
c) de détermination du décalage de phase entre le premier et le deuxième signal alternatif en envoyant un signal de décalage de phase (1 ; U_{DC}),
d) de comparaison du signal de décalage de phase (1 ; U_{DC}) à une valeur limite supérieure (U_{lim,1}) prédéfinie et à une valeur limite inférieure (U-_{lim,2}) prédéfinie pour le signal de décalage de phase (1 ; U_{DC}),
dans lequel, quand le signal de décalage de phase (1 ; U_{DC}) dépasse la valeur limite supérieure (U_{lim,1}) ou reste inférieur à la valeur limite inférieure (U_{lim,2}), l'apport en énergie est modifié.

2. Procédé selon la revendication 1, **caractérisé en ce que** le coupage thermique est effectué à une vitesse de coupage, et que l'apport en énergie est modifié **en ce que** la vitesse de coupage est réduite.

3. Procédé selon la revendication 2, **caractérisé en ce que** la vitesse de coupage est réduite progressivement.

4. Procédé selon l'une quelconque des revendications précédentes 2 ou 3, **caractérisé en ce qu'**après la réduction de la vitesse de coupage, la vitesse de coupage est à nouveau augmentée quand le signal de décalage de phase (1 ; U_{DC}) se trouve à nouveau dans la plage entre la valeur limite inférieure (U_{lim,2}) et la valeur limite supérieure (U_{lim,1}).

5. Procédé selon l'une quelconque des revendications précédentes, **caractérisé en ce que** l'apport en énergie est modifié **en ce que** le coupage thermique de la pièce (208) est arrêté.

6. Procédé selon la revendication 5, **caractérisé en ce qu'**après l'arrêt du coupage thermique de la pièce (208), une opération de coupage démarre à nouveau à partir d'un point de rupture de coupe.

7. Procédé selon l'une quelconque des revendications précédentes, **caractérisé en ce que** lors du coupage thermique, la distance entre les électrodes de mesure par rapport à la pièce (208) est maintenue avec une régulation de distance sur une valeur de consigne de distance prédéfinie, et que, quand le signal de décalage de phase (1 ; U_{DC}) dépasse la valeur limite supérieure (U_{lim,1}) ou reste inférieur à la valeur limite inférieure (U_{lim,2}), l'électrode de mesure (207) est réglée sur une position en hauteur fixe prédéfinie.

8. Procédé selon la revendication 7, **caractérisé en ce que** la position en hauteur fixe prédéfinie est déterminée à partir de valeurs de hauteur ou de valeurs de distance de l'électrode de mesure (207) par rapport à la surface de pièce dans un laps de temps avant le dépassement de la valeur limite supérieure (U_{lim,1}) ou le non-dépassement de la valeur limite inférieure (U_{lim,2}).

9. Procédé selon l'une quelconque des revendications précédentes, **caractérisé en ce que**, quand le signal de décalage de phase (1 ; U_{DC}) dépasse la valeur limite supérieure (U_{lim,1}) ou reste inférieur à la valeur limite inférieure (U_{lim,2}), un signal d'avertissement est envoyé.

10. Dispositif servant à identifier une menace ou la survenue d'une rupture de coupe lors du coupage thermique d'une pièce (208), où un apport en énergie est effectué dans une zone de coupe, présentant un générateur de signaux alternatifs (200) servant à générer un premier signal alternatif et une électrode de mesure (207) tenue à distance de la pièce, servant à détecter un deuxième signal alternatif provoqué par le signal alternatif dans l'électrode de mesure (207), **caractérisé en ce que** le dispositif présente un discriminateur de phase (202) servant à déterminer un décalage de phase entre le premier et le deuxième signal alternatif, dans lequel le discriminateur de phase envoie un signal de décalage de phase (1 ; U_{DC}), et une unité de contrôle (203) servant à comparer le signal de décalage de phase (1 ; U_{DC}) à une valeur limite supérieure (U_{lim,1}) prédéfinie et à une valeur limite inférieure (U_{lim,2}) prédéfinie pour le signal de décalage de phase (1 ; U_{DC}), dans lequel l'unité de contrôle est configurée de telle sorte qu'elle modifie, lors d'un dépassement de la valeur limite supérieure (U_{lim,1}) ou d'un non-dépassement de la valeur limite inférieure (U_{lim,2}), l'apport en énergie au moyen d'un circuit (204, 205, 206) électronique.

11. Dispositif selon la revendication 10, **caractérisé en ce que** l'unité de contrôle (203) est configurée de telle sorte qu'elle arrête, lors d'un dépassement de la valeur limite supérieure (U_{lim,1}) ou d'un non-dépassement de la valeur limite inférieure (U_{lim,2}), le coupage thermique de la pièce (208).
